# EUROPÄISCHE PATENTSCHRIFT

(11) **EP 3 627 257 B1**
(45) Veröffentlichungstag und Bekanntmachung des Hinweises auf die Patenterteilung: **30.11.2022**
(21) Anmeldenummer: 18195208.6
(22) Anmeldetag: 18.09.2018
(51) Int. Cl.: G05B 19/418

(54) **BEWEGUNGSPLANUNG FÜR EIN TRANSPORTSYSTEM EINER SERVOPRESSENANLAGE**
MOTION PLANNING FOR A TRANSPORT SYSTEM OF A SERVOPRESS INSTALLATION
PLANIFICATION DE MOUVEMENT POUR UN SYSTÈME DE TRANSPORT D'UNE INSTALLATION DE SERVOPRESSE

(43) Veröffentlichungstag der Anmeldung: 25.03.2020
(73) Patentinhaber: Siemens Aktiengesellschaft, 80333 München (DE)
(72) Erfinder: Bitterolf, David, 91056 Erlangen (DE); Hoja, Stephan, 90556 Cadolzbrug (DE); Kneissl, Dominik, 90429 Nürnberg (DE); Schlegel, Oleg, 91058 Erlangen (DE); Stöckel, Tina, 91088 Bubenreuth (DE)

(56) Entgegenhaltungen:
- US-A1- 2006 217 841
- US-A1- 2013 119 916
- US-A1- 2018 117 869

## Beschreibung

Die Erfindung betrifft eine Bewegungsplanung für ein Transportsystem einer Servopressenanlage, eine Bewegungssteuerung für ein Transportsystem einer Servopressenanlage, sowie ein zugehöriges Computerprogrammprodukt.

In der Umformindustrie werden Pressen zum Umformen bzw. Pressen von Material eingesetzt. Dabei kommen oftmals ganze Pressenlinien zum Einsatz, in welchen mehrere Pressen hintereinander angeordnet sind und ein zu verarbeitendes Werkstück oder Gut von einer Presse zu der nächsten oder nachfolgenden Presse bewegt wird. Dabei wird beispielsweise ein zu pressendes Stück Metall zunächst von einer ersten Presse in eine erste Form gepresst und dann an eine zweite Presse als zweite Bearbeitungsstation übergeben und dort wiederum bearbeitet. Die Pressen sind dabei teilweise autark und prozesstechnisch sind sie durch Systeme für den Materialtransport verbunden. Man spricht von einem Transportsystem, beispielsweise einem Transfersystem, welches für den Transport zwischen den Pressen zuständig ist oder einem geeigneten Roboter. Eine Vorrichtung, welche den Transport des Materials zwischen den Pressen bewerkstelligt, wird auch als Transportvorrichtung oder als Transfervorrichtung oder als Transfer bezeichnet.

Die Pressen untereinander werden elektrisch über einen Getriebe- oder Kurvenscheibengleichlauf ggf. mit einem Versatzwinkel synchronisiert, die Materialtransportsysteme werden jeweils auf eine einzelne Presse elektrisch über Getriebe oder Kurvenscheibengleichlauf oder über Steuernocken synchronisiert.

Es kommen in der Umformindustrie vermehrt Servopressen zum Einsatz. Ein hoher Anteil der Umformleistung wird bei Servopressen direkt über den Pressenhauptantrieb erzeugt und nicht weitgehend durch ein mechanisches Schwungrad wie bei Schwungradpressen. Dies führt zu einer entsprechend hohen Spitzenleistung während der Umformung bei Servopressen. Eine Servopresse kann den Stößel oder den Exzenter nach einem Bewegungsprofil verfahren und insbesondere während des Umformprozesses langsam verfahren und schnell im Umkehrpunkt zu Zwecken der Produktivitätssteigerung. Eine Servopresse wird mit einer im Vergleich zur Durchschnittsgeschwindigkeit kleineren Umformgeschwindigkeit betrieben.

Herkömmlicherweise erfolgt die Programmierung der Transporteinrichtung winkelbasiert auf Basis der zugeordneten Presse entweder im Gleichlauf oder ereignisgesteuert. Die Programmierung beinhaltet eine Beschreibung der Transportbewegung hinsichtlich der Bewegungswinkel der Presse d.h. eine Bewegung des Transportsystems zur Entnahme eines Gutes aus einer ersten Presse startet bei einer vorgegebenen Pressenöffnung dieser Presse. Die Bewegung erfolgt als ein durchgehender Verfahrsatz und umfasst das Eindringen der Transportvorrichtung in die Presse zur Aufnahme des Gutes, eine Vorschubbewegung hin zu einer nächsten Presse, das darauffolgende Ablegen des Gutes in dieser nächsten Presse sowie die Rückfahrt in eine Warteposition, aus der der Transfer wieder gestartet wird und der Zyklus wieder beginnt. Eine vorgegebene Pressenschließung der nächsten Presse gilt als weitere Vorgabe für die Transferbewegung. Zu diesem Zeitpunkt muss die Transportvorrichtung wieder einen definierten Zustand in Bezug auf diese Presse eingenommen haben, beispielsweise außerhalb der Presse sein.

Es werden zur Beschreibung der Transportbewegung lediglich Angaben in Hinblick auf die zulässige Dynamik, beispielsweise maximal mögliche Geschwindigkeiten oder maximal mögliche Beschleunigung, sowie die Start- und Endpunkte des Bewegungsabschnittes, sowie die Art des Bewegungsprofils, beispielsweise ein Polynom, vorgegeben

In Abhängigkeit von der Programmierung des Transportsystems wird dann der Zeitbedarf für das Materialhandling in der Presse abgeleitet. Je langsamer das Transportsystem den Transfer des Materials vornehmen kann, desto mehr Zeit benötigt er für das Be- und Entladen an einer Presse. Entsprechend muss die Presse mehr Zeit für den Vorgang zur Verfügung stellen was in einer langsameren Pressengeschwindigkeit resultieren kann. Auch der Versatz der Pressen untereinander ist abhängig von der Zeitdauer, welche die Transporteinrichtung für den Transportvorgang benötigt.

Der Versatz zwischen zwei Pressen ist auf vorteilhafte Weise anpassbar. Für eine Erhöhung des Versatzes ist entsprechend der Transfer in der Vorschubbewegung auszubremsen, d.h. die gesamte Dauer, welche durch den Transfer für den Transport des Materials von einer ersten Presse zu einer zweiten Presse benötigt wird, ist zu verlängern. Da die gesamte Vorschubbewegung des Transportsystems aus der vorhergehenden Presse heraus bis in die nachfolgende Presse hinein herkömmlicherweise aus einem Verfahrsatz besteht, wird mit Verringern der Dynamik dieses Verfahrsatzes zugleich auch der Zeitbedarf für das Materialhandling, also das Be- und Entladen in der Presse erhöht. Als Folge davon muss die Presse mehr Zeit für diesen Vorgang zur Verfügung stellen, was wiederum zu einem Ausbremsen der Presse führen kann. Dies ist nachteilig, da gerade dies die Phase ist, in welcher die Presse mit überdurchschnittlich hoher Geschwindigkeit arbeiten könnte.

Die Offenlegungsschrift US20180117869A1 zeigt eine Optimierung eines Pressenbewegungsprofils mithilfe von Synchronisationspunkten eines vorgegebenen Transferbewegungsprofils.

Die Offenlegungsschrift US20060217841A1 zeigt einen Controller, der die Bewegung mehrerer Roboter miteinander synchronisiert. Dabei wird die jeweilige Roboterbewegung von einem Startpunkt zu einem Synchronisationspunkt betrachtet.

Die Offenlegungsschrift US20130119916A1 betrifft die Erstellung Energie-effizienter Bewegungsprofile.

Vor diesem Hintergrund ergibt sich aus dem Stand der Technik die Aufgabe, ein verbessertes Betreiben einer Servopressenanlage zu ermöglichen, bei welchem eine maximal erreichbare Maschinengeschwindigkeit möglichst wenig verringert werden muss.

Diese Aufgabe wird durch den Gegenstand der unabhängigen Ansprüche gelöst. Vorteilhafte Ausgestaltungen sind in den abhängigen Ansprüchen angegeben.

Die Erfindung betrifft ein Verfahren zur Bewegungsplanung für ein Transportsystem einer Servopressenanlage, wobei in der Servopressenanlage mindestens eine erste Servopresse und eine zweite Servopresse vorgesehen sind und wobei das Transportsystem mindestens eine Transportvorrichtung zum Bewegen eines durch die Servopressenanlage zu bearbeitenden Gutes aufweist und die Bewegung der mindestens einen Transportvorrichtung durch eine Bewegungssteuerung des Transportsystems gesteuert wird, aufweisend die folgenden Schritte:
- Ermitteln eines Bewegungsabschnittes der nur den Bereich außerhalb jeweiliger Pressenarbeitsräume der ersten Servopresse und der zweiten Servopresse betrifft;
- Bestimmen und Vorgeben einer Zeitdauer für die Bewegung innerhalb des Bewegungsabschnittes und von der ersten Servopresse zu der zweiten Servopresse;
Berechnen einer Bewegungskurve für die Bewegung innerhalb des Bewegungsabschnittes anhand der bestimmten und vorgegebenen Zeitdauer, wobei als Randbedingungen der Bewegungskurve eine erste Position an einem ersten Rand des Bewegungsabschnittes zu einem Startzeitpunkt der Zeitdauer und eine zweite Position an einem zweiten Rand des Bewegungsabschnittes zu einem Endzeitpunkt der Zeitdauer festgelegt werden und
Steuern der Transportvorrichtung (T) anhand der berechneten Bewegungskurve.

Es wird erfindungsgemäß eine Bewegungsplanung für ein Transportsystem vorgesehen, welche das Berechnen einer Bewegungskurve für die Bewegung einer Transportvorrichtung umfasst. Genauer wird die Bewegungskurve für den Bereich berechnet, in welchem eine Verzögerung der Transportvorrichtung idealerweise keine Auswirkung auf die Gesamtzeit des Materialtransports in der Presse hat. Diese Gesamtzeit des Materialtransports kann somit auf vorteilhafte Weise minimal bleiben. Der Bewegungsabschnitt liegt außerhalb des jeweiligen Pressenarbeitsraumes. D.h., dass für die Bewegung, welche weder innerhalb des Pressenarbeitsraumes einer ersten Servopresse noch innerhalb des Pressenarbeitsraumes einer zweiten Servopresse abläuft, sondern außerhalb dieser Pressenarbeitsräume, ein spezielles Bewegungsprofil vorgesehen wird, welches auf eine bestimmte Zeitdauer ausgerichtet ist, d.h. welches einen Positionsverlauf der Transportvorrichtung, beispielsweise eines Transfers, während dieser Zeitdauer berechnet.

In einer möglichen Ausgestaltung wird der Pressenarbeitsraum durch den geometrischen Pressenarbeitsraum beschrieben. Der geometrische Pressenarbeitsraum wird in einem besonders einfachen Fall beispielsweise durch die Geometrie des jeweiligen Pressentisches festgelegt. Außerhalb eines so definierten Pressenarbeitsraumes der ersten Servopresse kollidiert vorteilhafterweise ein zu der zweiten Presse hin zu bewegendes Gut weder mit der ersten Servopresse, noch mit einem anderen Gut, mit welchem die erste Presse im Anschluss an das Entladen beladen werden soll.

In einer weiteren Ausgestaltung wird der Pressenarbeitsraum über einen Kollisionsbereich des zu entladenden Gutes definiert. Dabei wird derjenige Bereich als Pressenarbeitsraum definiert, bei dem eine geometrische oder räumliche Überschneidung von einem zu beladenden Gut und dem zu entladenden Gut aufgrund der Geometrie der jeweiligen Transportvorrichtung und der jeweiligen Güter nicht möglich ist. Der Bereich außerhalb des so definierten Pressenarbeitsraumes kann entsprechend für die Vorschubbewegung von der ersten Servopresse zu der zweiten Servopresse derart genutzt werden, dass eine Anpassung der Bewegungskurve die beladende Transportvorrichtung nicht beeinflusst.

In einer weiteren Ausgestaltung wird der Pressenarbeitsraum unter Berücksichtigung der jeweiligen Verfahrkurven des zu entladenden Gutes und des zu beladenden Gutes ermittelt. Beispielsweise kann eine Rotation der Güter derart aufeinander abgestimmt erfolgen, dass trotz möglichem geometrischem Überlapp der Güter je nach Rotationsstellung keine Beeinflussung der beiden Güter untereinander stattfindet. Der Bereich außerhalb des jeweiligen Pressenarbeitsraumes wird bei dieser möglichen Festlegung des Pressenarbeitsraumes nochmals erweitert, da das Bewegungsprofil bis relativ weit in die Presse hinein noch angepasst werden kann und gemäß den beschriebenen Schritten in Abhängigkeit von der Zeitdauer bestimmt werden kann, wenn das Verfahrprofil der Transportvorrichtung zwischen der ersten und der zweiten Servopresse und das Verfahrprofil der die erste Servopresse belandenden Transportvorrichtung entsprechend berücksichtigt werden.

Somit kann explizit der Teil der Bewegung während des Transportvorgangs der Transportvorrichtung geplant werden, welcher nicht das Be- oder Entladen betrifft oder diese Vorgänge zeitlich nicht beeinflusst, insbesondere eine Zeitspanne von Eintritt einer Transportvorrichtung zum Entladen an der ersten Servopresse bis zum Austritt einer weiteren Transportvorrichtung zum Beladen an der ersten Servopresse nicht verlängert. Es kann vorgegeben werden, nach Ablauf welcher Zeitdauer der Transport außerhalb des Pressenarbeitsraumes von der ersten Servopresse hin zu der zweiten Servopresse abgeschlossen sein soll. Dazu wird ein geeigneter Versatz zwischen zwei Pressen bestimmt. Der Versatz wird über Tests ermittelt oder aus Optimierungsverfahren berechnet. Zugleich kann die Bewegung des Transfers zum Entladen und/oder zum Beladen mit maximaler Geschwindigkeit durchgeführt werden.

Beispielsweise kann innerhalb des ermittelten Bewegungsabschnitts die Geschwindigkeit reduziert werden oder eine kontrollierte Reversierbewegung durchgeführt werden, um den Transport innerhalb einer vorgegebenen und festgelegten Zeitdauer abzuschließen. Zum Ablauf der bestimmten Zeitdauer befindet sich dann der Transfer mit dem Material beispielsweise vor dem Eintritt in die zweite Servopresse, so dass das Beladen der zweiten Servopresse beispielsweise mit maximaler Geschwindigkeit beginnen kann.

In der vorliegenden Erfindung wird somit die Möglichkeit geschaffen, die Transportvorrichtung gezielt in einem zu spezifizierenden geometrischen Bereich zwischen zwei Servopressen auszubremsen, ohne die Be- und Entladevorgänge in den Servopressen zu beeinflussen, genauer ohne eine Verzögerung eines gesamten Be- und Entladevorganges zu bewirken.

In einer Servopressenanlage sind insbesondere mehrere Servopressen vorgesehen und beispielsweise mehrere Transportvorrichtungen, die jeweils den Transport zwischen zwei Servopressen bewerkstelligen. In einer Variante bilden die mehreren Transportvorrichtungen das Transportsystem und die Bewegung der einzelnen Transportvorrichtungen, die ja individuell und je nach ermittelter Bewegungskurve erfolgen soll, wird von einer Bewegungssteuerung gesteuert. Beispielsweise ist die Bewegungssteuerung eine übergeordnete Steuerung und den einzelnen Transportvorrichtungen sind jeweils untergeordnete Steuerungen, insbesondere in einen Umrichter integrierte Steuerungen, zugeordnet.

Gemäß einer Ausgestaltung wird der Bewegungsabschnitt anhand von geometrischen Daten der jeweiligen Servopresse sowie der Transportvorrichtung und insbesondere zusätzlich des Gutes ermittelt. Um einen geeigneten Bewegungsabschnitt zu ermitteln, welcher nur den Bereich des Transportvorgangs betrifft, welcher nicht innerhalb eines Pressenarbeitsraumes in einer der vorgestellten Definitionen liegt, ist sowohl die Servopresse selbst sowie das Werkzeug mit deren spezifischen geometrischen Ausmaßen als auch die Transportvorrichtung mit ihren spezifischen geometrischen Ausmaßen zu berücksichtigen.

Je nach Wahl der beschriebenen Varianten zur Festlegung des Pressenarbeitsraumes sind neben der Geometrie des zu transportierenden Gutes und ggf. zusätzlich der Geometrie der Transportvorrichtung zusätzlich die geometrischen Begrenzungen aufgrund der Servopresse oder zusätzlich eines die erste Servopresse zu beladenden Gutes oder dessen Verfahrkurve zu beachten. Beispielsweise kann die Abmessung des Gutes, welches die Transportvorrichtung transportiert, weiter einschränkend auf den Bewegungsabschnitt wirken, insbesondere wenn das Gut über die geometrischen Abmessung der Transportvorrichtung hinausschaut oder sich darüber hinaus erstreckt. Auch der gegenteilige Fall ist vorstellbar, in dem sich die Transportvorrichtung über das Gut hinaus erstreckt. In beiden Fällen ist sicherzustellen, dass sich die Transportvorrichtung inklusive des zu transportierenden Gutes außerhalb des Pressenarbeitsraumes befindet.

Damit wird auf vorteilhafte Weise sichergestellt, dass die Transporteinrichtung oder die Transportvorrichtung zum Entladen an der ersten Servopresse im Zusammenspiel mit einer Transportvorrichtung zum Beladen an der ersten Servopresse den Be- und Entladevorgang mit maximaler Geschwindigkeit durchführen können, ohne von der Bewegungsplanung innerhalb des Bewegungsabschnittes beeinflusst zu werden. Dies stellt sicher, dass die Servopresse mit maximaler Performance betrieben werden kann. Sobald jedoch die Transportvorrichtung bzw. das durch die Servopresse zu bearbeitende und durch die Transportvorrichtung zu transportierende Gut außerhalb des Pressenarbeitsraumes einer jeweiligen Servopresse sind, kann die Bewegung gemäß der mit dem vorgeschlagenen Verfahren ermittelten Bewegungsplanung durchgeführt werden.

Gemäß einer Ausgestaltung wird die Zeitdauer anhand von Angaben über einen optimalen Versatz zwischen der ersten Servopresse und der zweiten Servopresse bestimmt. Auf vorteilhafte Weise wird die Zeitdauer für die Bewegung innerhalb des Bewegungsabschnittes dadurch vorgegeben, dass ein sogenannter optimaler Versatz festgelegt wird. Dieser Versatz betrifft die zeitliche Beabstandung analoger Pressenbewegungen zwischen zwei Servopressen. Als Versatz wird beispielsweise der zeitliche Abstand zwischen dem oberen Totpunkt in einem Umformzyklus der ersten Servopresse und dem der zweiten Servopresse verstanden. Beispielsweise wird als Versatz ferner ein Winkel-Offset eines virtuellen Winkels zwischen zwei Servopressen bezeichnet.

Gemäß einer Ausgestaltung wird als ein erstes Kriterium für den optimalen Versatz zwischen zwei Servopressen eine minimale Zeitdauer für den Durchlauf des Gutes durch die Servopressenanlage gewählt. Dabei ist der limitierende Faktor oftmals die Geschwindigkeit oder Dynamik, mit der der Transfer einen Transport eines Werkstückes von einer Servopresse zur nächsten bewerkstelligen kann. Je nachdem, wie schnell das Transportsystem den Transport der zu bearbeitenden Güter durch die Servopressenanlage bewerkstelligen kann, wird für ein Servopressenpaar der optimale Versatz festgelegt.

Ein so ermittelter durchlaufzeitoptimierter Versatz ist der kleinstmögliche Versatz, der möglich ist, um eine maximale Performance des Gesamtsystems zu erzielen. Ein kleinerer Versatz würde die Gesamtperformance reduzieren.

Gemäß einer Ausgestaltung wird als ein zweites Kriterium für den optimalen Versatz eine minimale Gesamtspitzenleistung der Servopressenanlage gewählt. Beispielsweise ergibt sich dabei ein leistungsoptimaler Versatz, der verglichen mit dem durchlaufzeitoptimierten Versatz größer ist. Durch Vergrößern des Versatzes ausgehend von einem durchlaufzeitoptimierten Versatz kann beispielsweise erreicht werden, dass Brems- und Beschleunigungsvorgänge aufeinander treffen und sich so weitestgehend kompensieren. Leistungsspitzen mehrerer Servopressen werden so reduziert. Beispielsweise wäre bei zwei Pressen der optimale Versatz 180°, bei drei Pressen 120° usw. Idealerweise kann somit das Energiemanagement aufgrund der reduzierten Spitzenleistung kleiner ausfallen, ohne dass dabei die Gesamtperformance einer Servopressenanlage reduziert wird. Dies ist insbesondere der Fall, wenn eine Verzögerung des Versatzes aufgrund der Optimierung in Hinblick auf die Leistungsbilanz durch eine Reduzierung einer Wartezeit in der Grundposition der Transportvorrichtung kompensiert werden kann. In diesem Fall wird die Systemgeschwindigkeit und damit die Performance nicht beeinflusst.

Durch das Energiemanagement wird ebenfalls Energie für die Umformung zur Verfügung gestellt. Die Umformvorgänge sollten entsprechend so weit voneinander entfernt sein, dass ein notwendiges Aufladen noch möglich ist. In einem Fall, in dem die aufgrund der Spitzenleistungs-Optimierung berechnete Verzögerungszeit für die Realisierung des Versatzes größer ist als eine Wartezeit, erfolgt die Optimierung in Hinblick auf die Leistungsspitzen auf Kosten der Gesamtperformance.

Obwohl ein kürzerer Versatz vorgebbar wäre und der Transfer dieser Anforderung nachkommen könnte, da er den Materialtransport schnell genug durchführen könnte, wird beispielsweise bewusst ein längerer oder größerer Versatz festgelegt, damit ein zeitliches Zusammenfallen von Leistungsspitzen der Servopressen im Verbund vermieden wird.

Das vorgeschlagene Verfahren zur Bewegungsplanung betrifft im Kern die Bewegung innerhalb des ermittelten Bewegungsabschnittes. Zugleich werden jedoch Randbedingungen berücksichtigt, welche durch die Bewegung innerhalb der jeweiligen Pressenarbeitsräume und damit außerhalb des Bewegungsabschnittes vorgegeben sind. Diese Randbedingungen betreffen insbesondere die Position am Übergang vom jeweiligen Pressenarbeitsraum in den Bewegungsabschnitt.

Gemäß einer Ausgestaltung werden weiterhin eine Geschwindigkeit der Transportvorrichtung im Startzeitpunkt sowie eine Geschwindigkeit der Transportvorrichtung im Endzeitpunkt der Zeitdauer als Randbedingung festgelegt. Damit werden Unstetigkeiten der Geschwindigkeit beim Übergang zwischen dem Bereich außerhalb und innerhalb des Bewegungsabschnittes verhindert. Als weitere Randbedingung ist die Beschleunigung als Randbedingung vorgebbar, sowie vorteilhafterweise ferner der Ruck. Auf diese Weise wird eine besonders gleichmäßige Bewegung erreicht.

Gemäß einer Ausgestaltung beschreibt die Bewegungskurve eine translatorische Bewegung. Insbesondere ist die durch die Transportvorrichtung ausführbare Bewegung eindimensional entlang einer Schiene möglich.

Gemäß einer Ausgestaltung beschreibt die Bewegungskurve eine kontinuierliche Bewegung. Insbesondere ist die Kontinuität über den gesamten Verlauf der Bewegung innerhalb des Bewegungsabschnittes gegeben. Insbesondere sollen Unstetigkeiten, welche zu einer ruckartigen Bewegung führen können, vermieden werden. Gerade Start-Stopp-Vorgänge, welche aus einer Bewegung bei voller Geschwindigkeit heraus zum völligen Stillstand führen, stellen ein ungünstiges und in Hinblick auf die Energie nicht optimales Profil dar. Von einem Vorsehen einer kontinuierlichen Bewegung kann jedoch abgesehen werden, wenn ein ermittelter optimaler Versatz sowie ermittelte Randbedingungen eine Reversierbewegung erfordern. Eine kontrollierte Reversierbewegung, welche auch ein Rückwärtsfahren des Transfers im Verlauf der Vorschubbewegung umfassen kann und durch ein kontrolliertes Abbremsen und Beschleunigen mit vorgebbarer Beschleunigung erreicht werden kann, kann somit alternativ zur durchgehend kontinuierlichen Bewegungskurve Bestandteil einer vorteilhaften Bewegungskurve sein.

Gemäß einer Ausgestaltung wird die Bewegungskurve mit Hilfe von Polynomen, abschnittsweise definierten Funktionen, Punktetabellen oder nichtlinear skalierten Kurvenscheiben beschrieben. Beispielsweise wird die Bewegungsbahn des Transfers innerhalb des Bewegungsabschnittes mit Hilfe einer C2-stetigen Funktion derart skaliert, dass ein über die gesamte Bewegung kontinuierliches Bewegungsprofil durchfahren wird, das gerade die vorgegebene Zeitdauer für die Bewegung innerhalb des Bewegungsabschnittes vorsieht.

Gemäß einer Ausgestaltung beschreibt die Bewegungskurve einen beschleunigungsstetigen Übergang zwischen der Bewegung der Transportvorrichtung innerhalb des Pressenarbeitsraums der ersten Servopresse und innerhalb des Bewegungsabschnittes sowie einen beschleunigungsstetigen Übergang zwischen der Bewegung der Transportvorrichtung innerhalb des Bewegungsabschnittes und innerhalb des Pressenarbeitsraums der zweiten Servopresse.

Die Erfindung betrifft ferner eine Bewegungssteuerung nach Anspruch 10.

Dabei kann auf vorteilhafter Weise eine übliche industrielle Bewegungssteuerung zum Einsatz kommen, auf welcher eine CPU entsprechend eingerichtet ist, die beschriebene Berechnungseinheit zu umfassen. Es können ferner auf vorteilhafte Weise Schnittstellen vorgesehen sein, welche beispielsweise das Hinterlegen der zu speichernden Daten des Bewegungsabschnittes ermöglichen oder die Vorgabe einer Angabe der Zeitdauer. Dazu kann beispielsweise eine Nutzerschnittstelle mit Eingabepanel vorgesehen sein.

Die Einheiten können hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Prozessor oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein. Unter einem Prozessor ist eine elektronische Schaltung zur computerbasierten Datenverarbeitung zu verstehen, beispielsweise eine CPU. Es kann sich um die CPU eines Computers handeln oder um einen Mikroprozessor eines Mikrochips.

Gemäß einer Ausgestaltung steuert die Bewegungssteuerung zugleich eine Bewegung zumindest der ersten und/oder der zweiten Servopresse. Die Bewegungssteuerung kann somit als eine die Servopressen und die Transportvorrichtungen einheitliche Bewegungssteuerung vorgesehen sein. Es sind auch Alternativen denkbar, in welchen die Steuerungen für die Servopressen und eine oder mehrere Bewegungssteuerungen für die Transportvorrichtungen getrennt ausgeführt sind.

Die Erfindung betrifft ferner ein Computerprogrammprodukt nach Anspruch 12.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung in Frage, wie zum Beispiel ein Prozessor oder Mikroprozessor.

Die Erfindung wird nachfolgend anhand von Ausführungsbeispielen mit Hilfe der Figuren näher erläutert. Es zeigen:
Figur 1 eine schematische Darstellung eines Transportsystems innerhalb einer Pressenlinie zur Veranschaulichung eines Verfahrens zur Bewegungsplanung gemäß einem ersten Ausführungsbeispiel der Erfindung;
Figur 2 eine schematische Darstellung eines Transportsystems mit zugehöriger Steuerung innerhalb einer Servopressenanlage zur Veranschaulichung eines Verfahrens zur Bewegungsplanung gemäß einem zweiten Ausführungsbeispiel der Erfindung;
Figur 3 eine schematische Darstellung eines Verfahrensablaufes eines Verfahrens zur Bewegungsplanung für ein Transportsystem einer Servopressenanlage gemäß einem dritten Ausführungsbeispiel der Erfindung;
Figuren 4a-c Anpassung einer Transferbewegungskurve an ein exaktes Winkeloffset ausgehend von einer herkömmlichen Transferbewegungskurve.

In den Figuren sind funktionsgleiche Elemente mit denselben Bezugszeichen versehen, sofern nichts anderes angegeben ist.

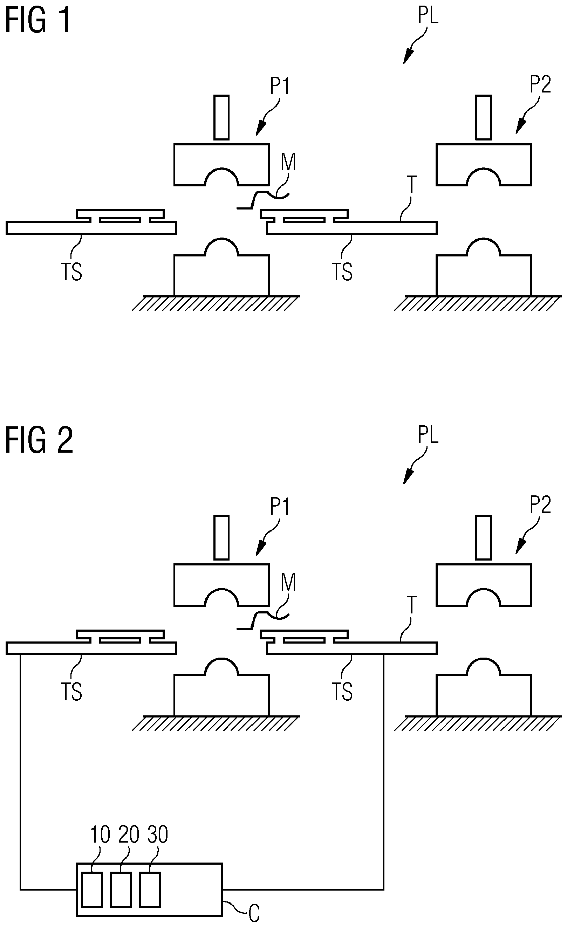

In Figur 1 ist eine Servopressenanlage oder Pressenlinie oder Pressline PL skizziert, in welcher sich eine erste Servopresse P1 sowie eine zweite Servopresse P2 befinden. Der Übersichtlichkeit halber wurde auf die Darstellung weiterer Servopressen verzichtet. Realistischerweise befinden sich in einer üblichen Servopressenanlage mehr als zwei Servopressen. Außerdem ist ein Transportsystem TS skizziert, welches eine Transfervorrichtung T, auch Transfer genannt, aufweist. Eine solche Transfervorrichtung T ist hinsichtlich der Geometrie auf eine Servopresse angepasst ausgestaltet und weist beispielsweise ein innerhalb der Transfervorrichtung T bewegliches Teil auf, welches zum Aufnehmen eines zu bearbeitenden Gutes M, beispielsweise ein zu pressendes Werkstück, geeignet ist. Beispielsweise greift ein Greifer oder Greifarm oder eine Klemme oder ein Sauger der Transfervorrichtung T das Gut oder Werkstück M zum Transportieren von der ersten Servopresse P1 zu der zweiten Servopresse P2. Dort wird das Werkstück ebenfalls durch den Transfer T in den Pressenarbeitsraum der zweiten Servopresse P2 eingebracht und insbesondere dort abgelegt oder in eine Form eingelegt. Zumindest Teile der Transfervorrichtung T sind somit räumlich zeitweise innerhalb des jeweiligen Pressenarbeitsraumes, um das Werkstück M, beispielsweise das zu pressende Material, aus der geöffneten erste Presse P1 heraus und anschließend in die geöffnete zweite Presse P2 hinein zu transferieren.

In einem ersten Ausführungsbeispiel der Erfindung soll die Gesamtzeit, welche für das Durchlaufen eines Bearbeitungsgutes M durch mehrere Servopressen, insbesondere die erste Servopresse P1 und die zweite Servopresse P2 sowie weitere nachfolgende Servopressen, welche nicht abgebildet sind, benötigt wird, minimiert werden. D.h., dass die gesamte Pressenlinie PL mit möglichst hoher Taktung ein Bearbeitungsgut M fertig bearbeitet haben soll. Eine Bearbeitung eines Werkstückes M ist abgeschlossen, sobald das Werkstück von der ersten Bearbeitungsstation, beispielsweise der ersten Servopresse P1, innerhalb der Pressenanlage PL bis zur letzten Bearbeitungsstation, beispielsweise einer letzten Servopresse, transferiert wurde und durch alle Stationen fertig bearbeitet wurde.

Für eine solche Auslegung der gesamten Servopressenanlage PL ist neben der Optimierung der einzelnen Umformprozesse an den einzelnen Servopressen bzw. neben deren zeitlicher Optimierung auch die Bewegung des Transportsystems TS zu optimieren. Die maximale Geschwindigkeit, mit welcher ein Bearbeitungsgut M von einer Servopresse zur nachfolgenden Servopresse, beispielsweise von der ersten Servopresse P1 zur zweiten Servopresse P2, transportiert werden kann, legt den minimalen Versatz fest, welcher zwischen diesen beiden Servopressen für die Durchlaufzeitoptimierung bestehen sollte.

In einem besonders einfachen und anschaulichen Szenario nehmen alle Umformprozesse aller beteiligten Servopressen eine gleich lange Zeitdauer in Anspruch und der Versatz ist Null, so dass der komplette Transportvorgang innerhalb eines Pressenzyklus ausgeführt wird. Dies ist möglich, wenn der Transfer T schnell genug ist, um den Transfer des Werkstückes von der ersten zur zweiten Servopresse und die Fahrt zurück zur ersten Presse innerhalb eines Pressenzyklus vollständig durchzuführen. Oftmals ist jedoch eine Realisierung eines so schnellen Transfers nicht möglich.

Wird nun ein Versatz größer null zwischen der ersten Servopresse und der zweiten Servopresse eingestellt, bleibt die Gesamtzeit, die dem Transfer T zur Verfügung steht, weiterhin identisch. Allerdings ändert sich das Verhältnis von Transportzeit und Rückfahrzeit, d.h. die Transportzeit, die für den Transport des Gutes von der ersten Servopresse P1 hin zur zweiten Servopresse P2 benötigt wird, wird größer, die Rückfahrzeit wird dafür kleiner. Dies ermöglicht eine Durchlaufzeit-Optimierung auch bei etwas längeren Transportzeiten des Transfers T.

Es wird nun angenommen, dass aufgrund einer Optimierung in Hinblick auf die aufzuwendende Gesamtleistung innerhalb der Pressenanlage PL ein Versatz zwischen einer ersten Servopresse 1 und einer zweiten Servopresse 2 vergrößert werden soll. Die Zeit für das Materialhandling, welches dem Transfer T zur Verfügung steht, um das Bearbeitungsgut M in der zweiten Servopresse P2 zu platzieren, soll weiterhin so gering wie möglich gehalten werden. Dennoch soll zugleich der Transfer T nun aufgrund des größeren Versatzes zur zweiten Servopresse P2 eine Anpassung der Bewegungsplanung vornehmen können.

Die Anpassung der Bewegungsplanung erfolgt derart, dass ein Bewegungsabschnitt zwischen der ersten Servopresse P1 und der zweiten Servopresse P2 ermittelt wird, in dem der Transfer nicht mit dem Vorgängertransfer oder dem nachfolgenden Transfer interagiert und so die Zeit für den gesamten Vorgang des Be- und Entladens nicht beeinflusst wird. Dieser Raum wird auch durch die geometrischen Gegebenheiten der Servopressenanlage PL und des Transportsystems TS vorgegeben. Zusätzlich ist er durch die Beschaffenheit des zu bearbeitenden Gutes M weiter beschränkt, da erst zu dem Zeitpunkt, zu welchem das zu entladende Gut den folgenden Beladevorgang nicht mehr verzögern kann, sichergestellt ist, dass die Gesamtzeit für das Be- und Entladen nicht verlängert wird.

Es wird dadurch sichergestellt, dass eine Verzögerung nur vorgenommen wird, wenn beispielsweise dadurch eine Pressenschließung nicht verzögert wird, insbesondere durch eine Verzögerung eines weiteren Transportsystems, welches zum Beladen der ersten Servopresse ebenfalls innerhalb des ersten Pressenarbeitsraumes bewegt wird.

Damit ist der Abschnitt der Bewegung in der ersten Servopresse P1 abgeschlossen, welche besonders schnell erfolgen kann und hier insbesondere unverändert bleibt. Somit ist zugleich der Bewegungsabschnitt abgeschlossen, welcher durch den Transfer T besonders schnell ausgeführt werden soll. Danach beginnt der Bewegungsabschnitt der Bewegung des Transfers T, in welchem eine Manipulation ohne Nachteil für die Taktung der Servopressen erfolgen kann, wenn der Transfer T auf dem Rückweg von der zweiten Servopresse P2 zur ersten Servopresse P1 entsprechend schneller verfahren kann und die Verzögerung aufholen kann.

Die Gesamtperformance der Pressenanlage bleibt somit erhalten. Die Zeit, die der Transfer T für die Bewegung von der ersten Servopresse P1 zur zweiten Servopresse P2 benötigt, wird auch Transportzeit genannt, die der Bewegung zurück zur ersten Servopresse P1 Rückfahrtzeit. Insbesondere kann die Transportzeit auch die jeweilige Handlingsphase in der Presse ganz oder teilweise umfassen.

Analog ist der Bewegungsabschnitt auf Seiten der zweiten Servopresse P2 dadurch begrenzt, dass er beendet ist, sobald eine Verzögerung des Transfers oder des zu bearbeitenden Werkstückes so mit dem die zweite Servopresse entladenden Folge-Transfer interagieren, dass es zu einer Verlängerung der Gesamtzeit des Be- und Entladevorgangs an der zweiten Servopresse kommt. Beispielsweise kann der Bewegungsabschnitt auf Seiten der zweiten Servopresse durch den Anfang des Pressenarbeitsraumes der zweiten Presse gebildet werden oder durch den Punkt, an dem sich die Werkstücke aufgrund ihrer Bahn zu keinem Zeitpunkt überschneiden können oder bahnabhängig noch weiter im Inneren der Presse, falls eine Kollision aufgrund der Bewegungskurve und insbesondere unter Berücksichtigung einer Drehung der Teile ausgeschlossen ist. Auch hier ist die nachfolgende Bewegung, welche das Materialhandling in der zweiten Servopresse P2 beschreibt, auf vorteilhafte Weise weiter mit maximaler Geschwindigkeit durchzuführen. Eine zeitliche Verzögerung, wie sie sich aufgrund des neuen Versatzes zwischen der ersten Servopresse P1 und der zweiten Servopresse P2 ergeben hat, erfolgt auf vorteilhafte Weise nur innerhalb des ermittelten Bewegungsabschnittes.

Die Zeitdauer wird dabei beispielsweise folgendermaßen bestimmt: Zunächst wird ein minimaler Versatz anhand einer konkreten Programmierung der Servopressen und des Transportsystems ermittelt. Dieser minimale Versatz bestimmt sich aus einer Durchlaufzeitoptimierung. Zusätzlich wird ein optimierter Versatz in Hinblick auf Energiemanagement-Überlegungen berechnet. Daraus wird die Abweichung des optimierten Versatzes von einem minimalen Versatz berechnet, beispielsweise als Korrekturwinkel. Daraus ist eine verlängerte Transportzeit ableitbar und aus dieser kann schließlich die Zeitdauer für die Bewegung innerhalb des Bewegungsabschnittes abgeleitet werden.

Ohne auf die Zeiten, welche der Transfer T für das Materialhandling benötigt, Einfluss zu nehmen, wird so die Bewegungskurve an den gewünschten Versatz angepasst. Dabei werden insbesondere Bewegungskurven ausgewählt, welche eine ruckfreie Bewegung gewährleisten. Dazu eignen sich beispielsweise C2-stetige Funktionen, welche als Bewegungskurve zugrundgelegt werden. Anhand von Randbedingungen, welche durch das Bewegungsprofil des Transfers beim Entladen und Beladen an der ersten Servopresse bzw. an der zweiten Servopresse vorgegeben sind, kann dann die passende Bewegungskurve ermittelt werden.

Anhand von Figur 2 wird eine zweite Ausführungsform der Erfindung beschrieben. Dabei wird eine Vorschubbewegung des Transfers T, d.h. die Bewegung eines zu bearbeitenden Gutes M innerhalb der Servopressenanlage PL, durch eine Bewegungskurve derart angepasst wird, dass quasi gewollt ein Versatz zwischen der ersten Servopresse P1 und der zweiten Servopresse P2 entsteht. Dieser Versatz bewirkt eine Optimierung des Energieversorgungsmanagement, indem eine Gesamtspitzenleistung der Servopressenanlage PL reduziert wird.

Beispielsweise wird zwischen mehreren Servopressen innerhalb der Servopressenanlage PL und insbesondere zwischen der ersten Servopresse P1 und der zweiten Servopresse P2 der Versatz der Umformprozessbewegung derart eingestellt, dass die Gesamtperformance der Servopressenanlage PL zwar nicht mehr maximal ist, jedoch stattdessen Spitzenleistungen, wie sie durch gleichzeitig oder synchron ablaufende Umformprozesse an mehreren Servopressen entstehen, deutlich reduziert sind.

Beispielsweise ergibt sich dieser Fall, wenn die Anlage Transfers zwischen Pressen umfasst, die keine Möglichkeit haben, eine längere Transportzeit durch eine kürzere Rückfahrzeit oder Wartezeit innerhalb der Rückfahrbewegung auszugleichen. Es sind auch Konstellationen denkbar, in denen einzelne Transfers und der Versatz der zugehörigen Pressen in der Anlage auch in Hinblick auf die Gesamtspitzenleistung optimiert werden, nämlich wenn es durch diese Transfers trotz Verlängerung der Transportzeit zu keiner Reduzierung der Performance kommt, und einzelne Transfers und deren Versatz der zugehörigen Pressen lediglich in Hinblick auf die Durchlaufzeit optimiert werden.

Eine Analyse der gesamten Servopressenanlage PL, in welcher ein optimaler Versatz ermittelt wird, kann der Bewegungsplanung vorteilhafterweise vorausgehen. Sobald ein Versatz zwischen zwei Servopressen feststeht, kann das Verfahren zur Bewegungsplanung für das Transportsystem gestartet werden. Bei der vorgelagerten Ermittlung eines optimalen Versatzes wird in der Regel eine Vergrößerung eines einzelnen Versatzes zwischen zwei Servopressen ausgehend von einem aufgrund der Möglichkeiten von Pressen und Transfervorrichtungen minimal möglichen Versatzes vorgenommen.

Figur 2 zeigt schematisch eine Bewegungssteuerung C für ein Transportsystem TS. Gemäß dem zweiten Ausführungsbeispiel der Erfindung ist die Bewegungssteuerung C als separate Bewegungssteuerung für das Transportsystem TS neben einer weiteren, nicht abgebildeten Steuerung für die Servopressen P1 und P2 ausgebildet. Der Bewegungsabschnitt, welcher den Bereich außerhalb jeweiliger Pressenarbeitsräume definiert, kann für jede Transfervorrichtung T innerhalb einer Servopressenanlage PL, d.h. zwischen den jeweiligen Servopressen jeweils individuell oder unterschiedlich ausfallen. Dabei spielt einerseits die Geometrie der beiden beteiligten Servopressen und andererseits die Geometrie der Transfervorrichtung eine bedeutende Rolle. Beispielsweise ist die Abmessung der Transfervorrichtung T selbst, beispielsweise die Länge der Transfervorrichtung T oder die Abmessungen, beispielsweise unter Berücksichtigung eines Greifelementes, welches an der Transfervorrichtung T vorgesehen ist, jeweils unterschiedlich.

Zusätzlich kann selbst bei gleicher Geometrie beteiligter Pressen und Transfervorrichtungen der Bewegungsabschnitt außerhalb jeweiliger Pressenarbeitsräume dadurch innerhalb der Pressenanlage PL variieren, dass das zu verarbeitende Gut M durch einen Umformprozess im Verlauf innerhalb der Servopressenanlage PL unterschiedliche Abmessungen aufweist. Beispielsweise nimmt ein Werkstück nach einem Umformprozess auf der Transfervorrichtung T mehr Platz in Anspruch und der Bewegungsabschnitt, welcher den Bereich außerhalb jeweiliger Pressenarbeitsräume beschreibt, bzw. der Bereich, innerhalb dessen die Bewegung der Transfervorrichtung T eine Bewegung des Gesamtgebildes aus Transfervorrichtung T und zur bearbeitendem Gut M außerhalb jeweiliger Pressenarbeitsräume bewirkt, wird entsprechend kleiner.

Die Bewegungssteuerung C eines Transportsystems TS, welches mehrere Transfervorrichtungen aufweist, hält für jede Transfervorrichtung die entsprechenden Daten des zugehörigen Bewegungsabschnittes bereit. Beispielsweise sind die Daten in einer Speichereinheit 10 gespeichert. Vorteilhafterweise verändern sich diese im laufenden Betrieb einer Servopressenanlage PL nicht oder kaum. Der Bewegungsabschnitt ist für jeden Transfer T separat zu bestimmen und entsprechend ist ein jedem Transfer T zugeordneter Datensatz in der Speichereinheit 10 zu speichern. Das Abspeichern kann beispielsweise bei einer Inbetriebnahme der Servopressenanlage PL erfolgen.

Die Angabe einer Zeitdauer für die Bewegung innerhalb des Bewegungsabschnittes wird anhand der Vorgabe des Versatzes ermittelt. Es ist auf der Bewegungssteuerung 10 beispielsweise eine Bereitstellungseinheit 20 vorgegeben, welche die Angabe der Zeitdauer enthält. Beispielsweise wird der Bereitstellungseinheit 20 bzw. der Bewegungssteuerung 10 über eine Eingabemaske ein Versatz mitgeteilt, anhand dessen die Bereitstellungseinheit 20 unter Berücksichtigung der Zeiten, die für das Materialhandling gebraucht werden, die Zeitdauer ermittelt.

Eine Berechnungseinheit 30 ist schließlich für das Berechnen einer passenden Bewegungskurve für die Bewegung innerhalb des Bewegungsabschnittes zuständig. Dafür wird insbesondere die Dauer berücksichtigt, welche im zweiten Ausführungsbeispiel der Erfindung einen gewünschten vergrößerten Versatz zur Minimierung der Leistungsspitzen bewirkt. Außerdem werden die einzuhaltenden Randbedingungen, wie sie insbesondere durch die Materialhandlings-Bewegung vorgegeben sind, berücksichtigt.

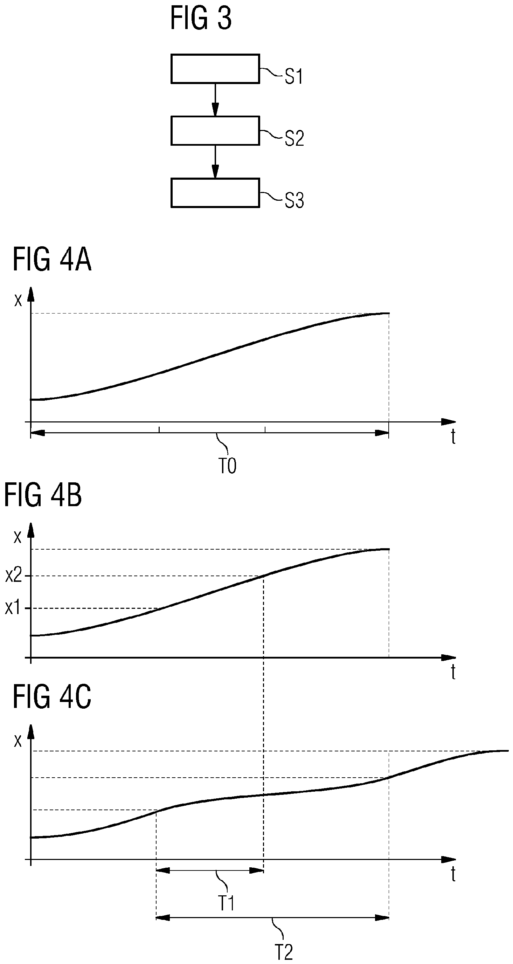

In Figur 3 ist schematisch ein Verfahrensablauf abgebildet, der das Verfahren zur Bewegungsplanung für ein Transportsystem gemäß einem dritten Ausführungsbeispiel der Erfindung beschreibt. Dabei erfolgt in einem ersten Schritt S1 das Ermitteln eines geeigneten Bewegungsabschnittes außerhalb jeweiliger Pressenarbeitsräume der ersten Servopresse und der zweiten Servopresse. In einem zweiten Schritt S2 erfolgt das Bestimmen einer Zeitdauer für die Bewegung innerhalb des Bewegungsabschnittes und von der ersten Servopresse zu der zweiten Servopresse.

Der erste Schritt S1 sowie der zweite Schritt S2 können dabei in beliebiger Reihenfolge durchgeführt werden. Beispielsweise wird das Ermitteln S1 eines Bewegungsabschnittes nur einmalig durchgeführt, wo hingegen das Bestimmen einer Zeitdauer S2 regelmäßig oder in bestimmten Intervallen durchgeht. Alternativ können beide Schritte S1 und S2 mit gleicher Häufigkeit durchgeführt werden.

Der erste Schritt S1 des Ermittelns eines Bewegungsabschnittes kann Teilschritte enthalten, welche eine Messung, insbesondere eine Abmessung geometrischer Gegebenheiten, umfasst. Ferner kann das Ermitteln aufgrund reiner Berechnung aus vorliegenden geometrischen Daten oder Bahndaten erfolgen. Das Bestimmen der Zeitdauer kann als zweiten Schritt S2 einen Teilschritt enthalten, welcher eine manuelle Ermittlung eines geeigneten Versatzes umfasst, beispielsweise anhand von Tests an der laufenden Servopressenanlage. Ferner kann die Berechnung eines optimalen Versatzes mit Hilfe eines Algorithmus erfolgen, so dass das Bestimmen einer Zeitdauer die Verarbeitung des Ergebnisses eines solchen Berechnungsschrittes umfasst.

Dem beschriebenen Verfahren zur Bewegungsplanung für ein Transportsystem einer Servopressenanlage geht in der Regel ein Optimierungsverfahren voraus, welches die Steuerung der Servopressen bei maximaler Geschwindigkeit des Transportsystems ermittelt. Es wird beispielsweise der Betrieb der Servopressenanlage daraufhin optimiert, eine möglichst hohe Performance aufzuweisen, wobei insbesondere die Transfervorrichtungen möglichst schnell betrieben werden, so dass insbesondere die Be- und Entladevorgänge möglichst wenig Zeit beanspruchen.

Bei einer solchen Optimierung wird beispielsweise eine Bewegungskurve für den Transfer entworfen, wie sie in Figur 4a dargestellt ist. Auf der horizontalen Achse ist die Zeit t aufgetragen, auf der vertikalen Achse ist die Position x des Transfers aufgetragen. Eine Zeitdauer T0 der Transferbewegung ist dabei möglichst kurz gewählt.

Ausgehend von dieser Optimierung, in welcher beispielsweise zunächst nur ein einheitlicher Verfahrsatz für eine Transfervorrichtung angenommen werden kann, erfolgt auf vorteilhafte Weise das Verfahren zur Bewegungsplanung für ein Transportsystem gemäß dem dritten Ausführungsbeispiel der Erfindung, insbesondere unter Berücksichtigung einer bestimmten und festgelegten Zeitdauer für die Bewegung innerhalb des Bewegungsabschnittes außerhalb jeweiliger Pressenarbeitsräume von einer ersten Servopresse zu einer zweiten Servopresse.

Figur 4b veranschaulicht diesen Schritt, indem für die Bewegung des Transfers die Positionen bestimmt werden, die den Bewegungsabschnitt begrenzen oder definieren. Dazu wird beispielsweise eine erste Position x1 ermittelt, bei der sich das Werkstück gerade außerhalb der ersten Servopresse befindet oder den ersten Pressenarbeitsraum verlässt. Zudem wird eine zweite Position beispielsweise bestimmt, bei der sich das Werkstück gerade noch nicht in der zweiten Servopresse befindet oder gerade in den zweiten Pressenarbeitsraum eindringt.

Sodann wird - veranschaulich in Figur 4c - die Bewegungskurve an einen als optimal ermitteltes Winkeloffset angepasst, indem die Bewegungskurve innerhalb der ersten Position x1 und der zweiten Position x2 angepasst wird. In diesem Abschnitt wird die Bewegung verzögert und nimmt eine zweite Zeitdauer T2 statt einer zuvor für den Bewegungsabschnitt benötigten ersten Zeitdauer T1 in Anspruch. Die Bewegungskurve wird beispielsweise als Kurve mit stetiger Geschwindigkeit und Beschleunigung zwischen die Bewegungsabschnitte der jeweiligen Ent- und Beladebewegung eingepasst. Die Bewegungskurve innerhalb der jeweiligen Pressenarbeitsräume bleibt wie in der Figur 4c zu erkennen unbeeinflusst und wird somit nicht verzögert.

Auf vorteilhafte Weise wird bei Anwendung des vorgeschlagenen Verfahrens ein Versatz oder Winkeloffset zwischen Servopressen innerhalb einer Servopressenanlage gezielt optimiert, ohne eine maximal erreichbare Maschinengeschwindigkeit zu verringern. Dafür bleibt insbesondere der Be- und Entladevorgang an einer Servopresse unberührt und wird mit maximaler Dynamik ausgeführt. Ein aufgrund einer Optimierung zusätzlich eingestellter Versatz kann durch Verringerung einer Wartezeit in der Rückfahrtbewegung oder eine schnellere Durchführung der Rückfahrtbewegung kompensiert werden. Ein gezieltes Verzögern außerhalb des geometrischen Pressenarbeitsraumes ermöglicht insbesondere ein in Hinblick auf ein Energiemanagement der Presse optimiertes Transportieren von Bearbeitungsgütern zwischen Servopressen einer Servopressenanlage.

Insbesondere werden durch das Ermitteln eines optimalen Versatzes zwischen zwei Servopressen Leistungsspitzen der Pressen ausgemittelt, so dass sich Leistungsspitzen, welche durch die Bewegungsprofile der Servopressen wie beispielsweise Bremsen oder Beschleunigen, oder durch die Umformleistung an sich entstehen, nicht unvorteilhaft addieren. Damit können Energieversorgungssysteme für die Servopressenanlage optimiert werden. Beispielsweise kann so die Einspeiseleistung oder die Größe des Energiemanagementsystems der Maschine möglichst reduziert werden.

Die Erfindung betrifft eine Bewegungsplanung für ein Transportsystem einer Servopressenanlage, eine Bewegungssteuerung für ein Transportsystem einer Servopressenanlage, sowie ein zugehöriges Computerprogrammprodukt unter Berücksichtigung eines in Hinblick auf Leistungsspitzen optimierten Winkeloffsets.

Obwohl die Erfindung im Detail durch die Ausführungsbeispiele näher illustriert und beschrieben wurde, so ist die Erfindung nicht durch die offenbarten Beispiele eingeschränkt und andere Variationen und Kombinationen können vom Fachmann hieraus abgeleitet werden, ohne den Schutzumfang der Ansprüche zu verlassen.

## Patentansprüche

1. Verfahren zur Bewegungsplanung für ein Transportsystem (TS) einer Servopressenanlage (PL), wobei in der Servopressenanlage (PL) mindestens eine erste Servopresse (P1) und eine zweite Servopresse (P2) vorgesehen sind und wobei das Transportsystem (TS) mindestens eine Transportvorrichtung (T) zum Bewegen eines durch die Servopressenanlage (PL) zu bearbeitenden Gutes (M) aufweist und die Bewegung der mindestens einen Transportvorrichtung (T) durch eine Bewegungssteuerung (C) des Transportsystems (TS) gesteuert wird, **gekennzeichnet durch** die folgenden Schritte:
- Ermitteln (S1) eines Bewegungsabschnittes, der nur den Bereich außerhalb jeweiliger Pressenarbeitsräume der ersten Servopresse (P1) und der zweiten Servopresse (P2) betrifft;
- Bestimmen (S2) einer Zeitdauer für die Bewegung innerhalb des Bewegungsabschnittes und von der ersten Servopresse (P1) zu der zweiten Servopresse (P2);
- Berechnen (S3) einer Bewegungskurve für die Bewegung innerhalb des Bewegungsabschnittes anhand der bestimmten Zeitdauer, wobei als Randbedingungen der Bewegungskurve eine erste Position an einem ersten Rand des Bewegungsabschnittes zu einem Startzeitpunkt der Zeitdauer und eine zweite Position an einem zweiten Rand des Bewegungsabschnittes zu einem Endzeitpunkt der Zeitdauer festgelegt werden und
Steuern der Transportvorrichtung (T) anhand der berechneten Bewegungskurve.

2. Verfahren nach Anspruch 1, wobei der Bewegungsabschnitt anhand von geometrischen Daten der jeweiligen Servopresse sowie der Transportvorrichtung und insbesondere zusätzlich des Gutes ermittelt wird.

3. Verfahren nach Anspruch 1 oder 2, wobei die Zeitdauer anhand von Angaben über einen optimalen Versatz zwischen der ersten Servopresse (P1) und der zweiten Servopresse (P2) bestimmt wird, wobei der Versatz die zeitliche Beabstandung analoger Pressenbewegungen der ersten Servopresse (P1) und der zweiten Servopresse (P2) betrifft.

4. Verfahren nach Anspruch 3, wobei als ein erstes Kriterium für den optimalen Versatz eine minimale Zeitdauer für den Durchlauf des Gutes (M) durch die Servopressenanlage gewählt wird.

5. Verfahren nach Anspruch 3 oder 4, wobei als ein zweites Kriterium für den optimalen Versatz eine minimale Gesamtspitzenleistung der Servopressenanlage (PL) gewählt wird.

6. Verfahren nach einem der vorstehenden Ansprüche, wobei die Bewegungskurve eine translatorische Bewegung beschreibt.

7. Verfahren nach einem der vorstehenden Ansprüche, wobei die Bewegungskurve eine kontinuierliche Bewegung beschreibt.

8. Verfahren nach einem der vorstehenden Ansprüche, wobei die Bewegungskurve mit Hilfe von Polynomen, abschnittsweise definierten Funktionen, Punktetabellen oder nichtlinear skalierten Kurvenscheiben beschrieben wird.

9. Verfahren nach einem der vorstehenden Ansprüche, wobei die Bewegungskurve einen beschleunigungsstetigen Übergang zwischen der Bewegung der Transportvorrichtung innerhalb des Pressenarbeitsraumes der ersten Servopresse und innerhalb des Bewegungsabschnittes sowie einen beschleunigungsstetigen Übergang zwischen der Bewegung der Transportvorrichtung innerhalb des Bewegungsabschnittes und innerhalb des Pressenarbeitsraumes der zweiten Servopresse beschreibt.

10. Bewegungssteuerung (C) für ein Transportsystem (TS) einer Servopressenanlage (PL), die konfiguriert ist, zum Steuern der Bewegung des Transportsystems anhand einer berechneten Bewegungskurve, wobei die Servopressenanlage (PL) mindestens eine erste Servopresse (P1) und eine zweite Servopresse (P2) aufweist und wobei das Transportsystem (TS) mindestens eine Transportvorrichtung (T) , die konfiguriert ist, zum Bewegen eines durch die Servopressenanlage (PL) zu bearbeitenden Gutes (M) aufweist, **gekennzeichnet durch**:
- eine Speichereinheit (10), die konfiguriert ist, zum Speichern von Daten eines Bewegungsabschnittes der nur den Bereich außerhalb jeweiliger Pressenarbeitsräume der ersten Servopresse (P1) und der zweiten Servopresse (P2) betrifft;
- eine Bereitstellungseinheit (20), die konfiguriert ist, zum Bereitstellen einer Angabe einer Zeitdauer für die Bewegung innerhalb des Bewegungsabschnittes und von der ersten Servopresse (P1) zu der zweiten Servopresse (P2);
- eine Berechnungseinheit (30), die konfiguriert ist, zum Berechnen der Bewegungskurve für die Bewegung innerhalb des Bewegungsabschnittes anhand der bestimmten Zeitdauer, wobei als Randbedingungen der Bewegungskurve eine erste Position an einem ersten Rand des Bewegungsabschnittes zu einem Startzeitpunkt der Zeitdauer und eine zweite Position an einem zweiten Rand des Bewegungsabschnittes zu einem Endzeitpunkt der Zeitdauer festgelegt werden;
- eine Steuerungseinheit, die konfiguriert ist, zum Steuern der Bewegung des Transportsystems anhand der berechneten Bewegungskurve.

11. Bewegungssteuerung (C) nach Anspruch 10, wobei die Bewegungssteuerung zugleich eine Bewegung zumindest der ersten Servopresse (P1) und/ oder der zweiten Servopresse (P2) steuert.

12. Computerprogrammprodukt mit einem Computerprogramm, das Mittel zur Durchführung des Verfahrens nach einem der Ansprüche 1 bis 9 aufweist, wenn das Computerprogramm auf einer Bewegungssteuerung nach einem der Ansprüche 10 bis 11 zur Ausführung gebracht wird.

## Claims

1. Method for motion planning for a conveyor system (TS) of a servo press installation (PL), wherein, in the servo press installation (PL), at least a first servo press (P1) and a second servo press (P2) are provided, and wherein the conveyor system (TS) comprises at least one conveyor apparatus (T) for the movement of a product (M) which is to be processed by the servo press installation (PL), and the motion of the at least one conveyor apparatus (T) is controlled by a motion controller (C) of the conveyor system (TS), **characterized by** the following steps:
- determination (S1) of a motion segment that concerns only the region outside respective pressing workspaces of the first servo press (P1) and the second servo press (P2);
- definition (S2) of a time interval for motion within the motion segment, and from the first servo press (P1) to the second servo press (P2);
- calculation (S3) of a motion curve for motion within the motion segment, with reference to the defined time interval, wherein, as marginal conditions for the motion curve, a first position on a first margin of the motion segment at a starting time point of the time interval, and a second position on a second margin of the motion segment at an end time point of the time interval, are established, and
- controlling the conveyor apparatus (T) based on the calculated motion curve.

2. Method according to Claim 1, wherein the motion segment is determined with reference to geometric data for the respective servo press and the conveyor apparatus, and, in particular, additionally for the product.

3. Method according to Claim 1 or 2, wherein the time interval is defined by reference to instructions relating to an optimum offset between the first servo press (P1) and the second servo press (P2), wherein the offset concerns the time difference between analogous pressing motions of the first servo press (P1) and the second servo press (P2).

4. Method according to Claim 3, wherein, as a first criterion for the optimum offset, a minimum time interval is selected for the throughput of the product (M) through the servo press installation.

5. Method according to Claim 3 or 4, wherein, as a second criterion for the optimum offset, a minimum overall peak power of the servo press installation (PL) is selected.

6. Method according to one of the preceding claims, wherein the motion curve describes a translational motion.

7. Method according to one of the preceding claims, wherein the motion curve describes a continuous motion.

8. Method according to one of the preceding claims, wherein the motion curve is described by means of polynomials, partially defined functions, point tables or non-linear scaled curve segments.

9. Method according to one of the preceding claims, wherein the motion curve describes a constant-acceleration transition between the motion of the conveyor apparatus within the pressing workspace of the first servo press and within the motion segment, and a constant-acceleration transition between the motion of the conveyor apparatus within the motion segment and within the pressing workspace of the second servo press.

10. Motion controller (C) for a conveyor system (TS) of a servo press installation (PL), which is configured to control the motion of the conveyor system based on a calculated motion curve, wherein the servo press installation (PL) comprises at least a first servo press (P1) and a second servo press (P2), and wherein the conveyor system (TS) comprises at least one conveyor apparatus (T) which is configured for the movement of a product (M) which is to be processed by the servo press installation (PL), **characterized by**:
- a storage unit (10), which is configured for the storage of data on a motion segment that concerns only the region outside respective pressing workspaces of the first servo press (P1) and the second servo press (P2);
- a delivery unit (20), which is configured for the delivery of an instruction with respect to a time interval for motion within the motion segment, and from the first servo press (P1) to the second servo press (P2) ;
- a calculation unit (30), which is configured for the calculation of the motion curve for the motion within the motion segment, with reference to the defined time interval, wherein, as marginal conditions for the motion curve, a first position on a first margin of the motion segment at a starting time point of the time interval, and a second position on a second margin of the motion segment at an end time point of the time interval, are established, and
- a control unit, which is configured to control the motion of the conveyor system based on the calculated motion curve.

11. Motion controller (C) according to Claim 10, wherein the motion controller simultaneously controls a motion of at least the first servo press (P1) and/or the second servo press (P2).

12. Computer program product having a computer program which comprises means for the execution of the method according to one of Claims 1 to 9, when the computer program is run on a motion controller according to either of Claims 10 to 11.

## Revendications

1. Procédé de planification de déplacement pour un système de transport (TS) d'une installation de servo-pressage (PL), dans lequel au moins une première servo-presse (P1) et une deuxième servo-presse (P2) sont prévues dans l'installation de servo-pressage (PL), et dans lequel le système de transport (TS) présente au moins un dispositif de transport (T) permettant de déplacer une marchandise (M) à façonner grâce à l'installation de servo-pressage (PL), et le déplacement du au moins un dispositif de transport (T) est commandé grâce à une commande de déplacement (C) du système de transport (TS), **caractérisé par** les étapes ci-dessous consistant à :
- déterminer (S1) une section de déplacement qui ne concerne que la région située à l'extérieur des espaces de travail de pressage respectifs de la première servo-presse (P1) et de la deuxième servo-presse (P2),
- définir (S2) une durée pour le déplacement au sein de la section de déplacement entre la première servo-presse (P1) et la deuxième servo-presse (P2) ;
- calculer (S3) une courbe de déplacement pour le déplacement au sein de la section de déplacement à l'aide de la durée définie, dans lequel une première position au niveau d'un premier bord de la section de déplacement à un instant de début de la durée et une deuxième position au niveau d'un second bord de la section de déplacement à un instant de fin de la durée sont définies comme conditions marginales de la courbe de déplacement, et
commander le dispositif de transport (T) à l'aide de la courbe de déplacement calculée.

2. Procédé selon la revendication 1, dans lequel la section de déplacement est déterminée à l'aide de données géométriques de la servo-presse respective ainsi que du dispositif de transport et, en particulier de manière supplémentaire, de la marchandise.

3. Procédé selon la revendication 1 ou 2, dans lequel la durée est définie à l'aide d'indications sur un décalage optimal entre la première servo-presse (P1) et la deuxième servo-presse (P2), dans lequel le décalage concerne l'espacement temporel de déplacements de presse analogues de la première servopresse (P1) et de la deuxième servo-presse (P2).

4. Procédé selon la revendication 3, dans lequel une durée minimale pour le passage du produit (M) à travers l'installation de servo-pressage est choisie comme premier critère pour le décalage optimal.

5. Procédé selon la revendication 3 ou 4, dans lequel une puissance de crête totale minimale de l'installation de servo-pressage (PL) est choisie comme deuxième critère pour le décalage optimal.

6. Procédé selon l'une quelconque des revendications précédentes, dans lequel la courbe de déplacement décrit un déplacement de translation.

7. Procédé selon l'une quelconque des revendications précédentes, dans lequel la courbe de déplacement décrit un déplacement continu.

8. Procédé selon l'une quelconque des revendications précédentes, dans lequel la courbe de déplacement est décrite à l'aide de polynômes, de fonctions définies par parties, de tableaux de points ou de tracés de courbe mis à l'échelle de manière non linéaire.

9. Procédé selon l'une quelconque des revendications précédentes, dans lequel la courbe de déplacement décrit une transition à accélération constante entre le déplacement du dispositif de transport au sein de l'espace de travail de pressage de la première servo-presse et au sein de la section de déplacement ainsi qu'une transition à accélération constante entre le déplacement du dispositif de transport au sein de la section de déplacement et au sein de l'espace de travail de pressage de la deuxième servo-presse.

10. Commande de déplacement (C) pour un système de transport (TS) d'une installation de servo-pressage (PL), qui est configurée afin de commander le déplacement du système de transport à l'aide d'une courbe de déplacement calculée, dans lequel l'installation de servo-pressage (PL) présente au moins une première servo-presse (P1) et une deuxième servo-presse (P2) et dans lequel le système de transport (TS) comprend au moins un dispositif de transport (T) qui est configuré afin de déplacer une marchandise (M) à façonner grâce à l'installation de servo-pressage (PL), **caractérisée par** :
- une unité de stockage (10) configurée afin de stocker des données d'une section de déplacement qui ne concerne que la région située à l'extérieur des espaces de travail de pressage respectifs de la première servo-presse (P1) et de la deuxième servo-presse (P2) ;
- une unité de fourniture (20) configurée afin de fournir une indication d'une durée pour le déplacement au sein de la section de déplacement et entre la première servo-presse (P1) et la seconde servo-presse (P2) ;
- une unité de calcul (30) configurée afin de calculer la courbe de déplacement pour le déplacement au sein de la section de déplacement à l'aide de la durée définie, dans laquelle une première position au niveau d'un premier bord de la section de déplacement à un instant de début de la durée et une seconde position au niveau d'un second bord de la section de déplacement à un instant de fin de la durée sont définies comme conditions marginales de la courbe de déplacement ;
- une unité de commande configurée afin de commander le déplacement du système de transport à l'aide de la courbe de déplacement calculée.

11. Commande de déplacement (C) selon la revendication 10, dans laquelle la commande de déplacement commande simultanément un déplacement d'au moins la première servo-presse (P1) et/ou de la deuxième servo-presse (P2).

12. Produit de programme informatique comprenant un programme informatique présentant des moyens permettant de mettre en œuvre le procédé selon l'une quelconque des revendications 1 à 9 lorsque le programme informatique est mis en œuvre sur une commande de déplacement selon l'une quelconque des revendications 10 à 11.
